# EUROPEAN PATENT APPLICATION

(11) **EP 4 574 684 A1**
(43) Date of publication of application: **25.06.2025**
(21) Application number: 23217714.7
(22) Date of filing: 18.12.2023
(51) Int. Cl.: B64G 1/44

(54) **SEMI-RIGID SOLAR PANEL ARRAY**

(71) Applicant: Airbus Netherlands B.V., 2333 CS Leiden (NL)
(72) Inventor: Kroon, Martin, 2317 NL Leiden (NL)
(74) Representative: Nederlandsch Octrooibureau

(57) **Abstract**

The present invention relates to a semi-rigid solar panelv(100) for a spacecraft comprising a frame; and one or more solar power modules (103) placed within the frame; wherein at least one side of the one or more solar power modules (103) connects to the frame by a sliding connection, allowing the one or more solar power modules (103) to slide within the frame.

## Description

### Field of the invention

The present invention relates to a semi-rigid solar panel for a spacecraft. Also, the invention relates to a solar panel array and a spacecraft comprising such a semi-rigid solar panel.

### Background

Solar panel arrays and other spacecraft appendages are generally deployed in space from a launch configuration into an on-orbit, or deployed configuration. A solar panel array usually consists of one or more solar panels connected with hinges in between the adjacent solar panels and in between the inner solar panel and the spacecraft body. Some further components may be present as well in the solar panel array structure. In a configuration, a deployable structure (yoke) can be present between the spacecraft body and the inner solar panel to extend the solar panel array at a certain distance from the spacecraft. The hinges allow a solar panel to rotate with respect to the adjacent panel, yoke, or spacecraft.

The design of a solar panel array is tailored to meet specific spacecraft requirements, particularly power needs, deployment frequency, and strength to endure launch and transfer orbit loads. Such solar panel arrays consist of rigid solar panels carrying solar cells. US4101101A discloses a solar generator mounted on board an artificial satellite and constituted by a plurality of pivoted panels each comprising a frame in which is disposed a thin flexible substrate carrying solar cells. The frame comprises intermediate stiffeners connecting two opposite sides of the frame. However, challenges arise due to the substrate's resonance frequency, influenced by its flexibility, and thermal expansion effects resulting from materials with distinct coefficients of thermal expansion. It is an object of the present invention to overcome or mitigate one or more of the disadvantages from the prior art.

### Summary of the invention

Therefore, according to a first aspect of the invention, there is provided a semi-rigid solar panel for a spacecraft comprising; a frame; and one or more solar power modules placed within the frame; wherein at least one side of the one or more solar power modules connect to the frame by a sliding connection allowing the one or more solar power modules to slide within the frame on at least one side.

A typical solar panel in a solar panel array has a frame of rectangular shape, in which the frame comprises between 2 to 4 beams in which the solar power modules can be attached from opposite beams of the frame. The skilled person will understand that solar panels may have other shapes besides rectangular and that the beams forming a non-rectangular shape may be called different due to an alternative spatial reference.

In this context, we use "sliding connection" to a connection that allows a relative and delimited movement between the connecting parts. The sliding connection enables predefined freedom on the positioning and alignment of the solar power modules within the frame, which prevents damage of the solar power modules and ensures a stable connection even when they are subjected to extremely varying environmental conditions. In this manner, the sliding connection provides the semi-rigid solar panel with the capacity to accommodate to external conditions, e.g., from launch to normal operation of a spacecraft, ensuring structural integrity and enhancing the semi-rigid solar panel's reliability.

The one or more solar power modules may slide within the frame in a pre-determined sliding range, the sliding range being determined based on manufacturing tolerances and/or anticipated displacements arising from thermal expansion, of the at least one solar power module and the frame. The predetermined sliding range can provide controlled movement and expansion of the solar power modules within the frame without compromising functionality, which is advantageous in maintaining structural integrity of the semi-rigid solar panel.

The frame may comprise at least one longitudinal beam and at least two lateral beams and wherein the sliding connection is linear and aligns parallel to the longitudinal beam or the lateral beam(s). Here we use "longitudinal beam" to refer to a beam that extends along a longitudinal axis of a solar panel array. The longitudinal beam may have a length suitable to connect with one or more multiple solar panels. In some embodiments, multiple longitudinal beams may be connected in series along a length of the solar panel array until a link to the spacecraft. Subsequently, here we use "lateral beam" to refer to a beam that extends substantially perpendicular to the longitudinal beam. In this context, lateral beams may be parallel to a transversal (lateral) axis of the solar panel array. In some embodiments, the solar power modules are connected to the frame through the lateral beams and the solar panels may connect to each other through linked longitudinal beams. The skilled person will understand that other arrangements between multiple longitudinal and lateral beams to form different configurations of the solar panel array are included in the scope of the invention.

The linear sliding range aligned with the longitudinal or lateral beam ensures that the solar power modules can move precisely in a controlled direction along an axis of the longitudinal or lateral beam, this further prevents misalignment of the solar power modules and collisions between them that could compromise integrity and performance of the semi-rigid solar panels.

The one or more solar power modules may comprise one or more flexible substrate sheets carrying one or more solar cells attached to a surface of the sheets. The use of flexible substrate sheets allow semi-rigid solar panels to be lighter than their rigid counterparts making them more efficient for their use in space.

The one or more solar power modules may have a rectangular shape with two short sides and two long sides, and wherein the sliding connection connects at least one short side of the solar power module to the frame. In this configuration the sliding connection connects at least one of the short sides of the solar power module to the frame. This facilitates movement along the length of the solar power module, in which potential thermal expansion differences can be more pronounced.

The sliding connection may comprise at least one first sliding element attached to the frame and at least one second sliding element attached to the side of the solar power module. This provides a modular design for the sliding connection, which simplifies assembly and maintenance, allowing for easy replacement or adjustment of the sliding elements if needed without having to replace, parts of, the solar power module or frame.

The at least one first sliding element may be a pin and the at least one second sliding element may be a guide within a predefined length defined by end-stops, the pin may slide in the guide. The use of pins and guides within a predefined length provides a simple implementation of the sliding connection to control movement of the solar power modules within the frame, preventing excessive motion while accommodating necessary sliding.

The semi-rigid solar panel may further comprise at least one resilient element between the frame and the at least one side of the solar power module. The resilient elements between the frame and solar power modules provide a protective mechanism within the semi-rigid solar panel and contribute to the optimal functioning of the solar power modules. They maintain elastic tension in the solar power modules within the frame and limit sagging or deformation, particularly when the solar power modules are formed with flexible sheets.

The at least one resilient element may provide an elastic bias onto the solar power module, wherein the direction of the bias may be within a plane defined by the solar power module and wherein the at least one resilient element may be configured to apply elastic tension in a direction parallel to a length of the solar power module and to keep the solar power module substantially parallel to a plane defined by the frame. The elastic bias can maintain the solar power modules in a precise tension and position relative to the frame, which ensures that the solar power modules consistently capture solar energy. It also reinforces the panel's structural integrity, providing long-term reliability and performance. In this way, the at least one resilient element ensures that the solar power module remains substantially parallel to the frame and helps to prevent collisions between adjacent solar power modules when the solar panel array is in a stowed state. This collision prevention is crucial for avoiding damage during deployment and operation in space.

The resilient element may adjust a resonance frequency of the solar power module to a frequency lower than the lowest vibration frequency that is typically experienced by the spacecraft during launch. Adjusting the resonance frequency of the solar power module with the resilient element can minimize the risk of damage due to vibrations during spacecraft launch, ensuring durability.

The at least one side of the one or more solar power modules connecting to the frame by a sliding connection may be reinforced by a strip, the strip may have a higher rigidity than the side of the solar power module. Reinforcing the side of the solar power modules with strips of higher rigidity distributes the connection force across a width of the solar power module, ensuring a uniform sliding range at all points of the solar power module.

The sliding connection and/or the resilient member may be attached to the frame by a flange protruding from the frame towards the side of the solar power module and extending substantially parallel to a plane defined by the solar power module. The attachment of sliding connections and/or resilient members to the frame via a flange provides a larger and convenient connection area between the frame and the solar power modules. This enables a wide range of implementations of the slider connection and/or resilient member without compromising the integrity of the frame, for instance, holes in the main portion of the frame can be avoided, which enables a stronger sliding and/or elastic connection that enhances the semi-rigid solar panel's structural stability. Furthermore, the flange allows for easy adjustment and/or replacement of sliding or resilient elements, providing flexibility in accommodating various design modifications without necessitating extensive alterations to the frame structure.

According to a second aspect of the invention, there is provided a solar panel array attached to a body of a spacecraft, comprising a plurality of solar panels arranged in an articulated structure pivotally linked to the body of the spacecraft, wherein the solar panels are rigid solar panels and/or semi-rigid solar panels according to the first aspect of the invention. The articulated structure of the solar panel array comprising rigid and semi-rigid solar panels, offers versatility and adaptability in configuring solar power generation for the spacecraft.

The solar panel array may have a stowed state in which the articulated structure is folded with the solar panels stacked on each other, and a deployed state with the solar panels substantially linearly aligned adjacent to each other and extending from the body of the spacecraft. Having both the stowed and deployed state provides an efficient use of space during launch and maximizes solar energy capture during operation, enhancing the spacecraft's overall performance. In the deployed state of the solar power array, a supporting beam may extend perpendicular to a sidewall of the body of the spacecraft and be configured to support a total load of the solar panel array. The supporting beam bears the loads of the solar panel array in the deployed state, ensuring its integrity in space and making it suitable to different spacecraft designs and requirements.

Solar power modules may be arranged in the semi-rigid solar panels, wherein the lowest resonance frequency of the solar power modules is higher than the lowest resonance frequency of the solar panel array in the deployed state. This prevents that the solar power modules are driven by the frequency experienced by the solar panel array. Furthermore, the lowest resonance frequency of the solar power modules is lower than the lowest frequency experienced during launch in a stowed state. This ensures that the solar panel array can withstand vibrations during spacecraft launch and minimizes the risk of damage or deformation to the semi-rigid solar panels.

### Brief description of drawings

Embodiments of the present invention will be described hereinafter, by way of example only, with reference to the accompanying drawings which are schematic in nature and therefore not necessarily drawn to scale.

In the drawings, identical or similar elements are indicated by the same reference sign.
Figure 1a schematically shows a perspective view of a first example of solar panel array according to the present invention, in a deployed state;
Figure 1b schematically shows a perspective view of parts of two semi-rigid solar panels of the solar panel array of Figure 1a connecting to a lateral beam;
Figure 1c schematically shows a lateral view of the solar panel array of Figure 1a in a stowed state;
Figures 2a, 2b, and 2c schematically show semi-rigid solar panels with sliding connections between a solar power module and a frame via two or four sliding connections;
Figure 3a schematically shows the solar power module and the frame of Figure 2b and further having resilient elements; Figure 3b schematically shows the solar power module and the frame of Figure 2c and further having resilient elements;
Figure 3c schematically shows a semi-rigid solar panel with four sliding connections and one resilient element;
Figure 4 schematically illustrates a second example of a solar panel array in a deployed state and having semi-rigid solar panels,
Figures 5a, 5b and 5c schematically illustrate a third example of solar panel array having semi-rigid solar panels. Figure 5a schematically shows a perspective frontal view of the solar panel array in a stowed state. Figures 5b and 5c schematically show a perspective back view of the solar panel array, respectively, during deployment and in a deployed state.

### Detailed description of embodiments

The following is a description of certain embodiments of the invention, given by way of example only and with reference to the figures. In the drawings, identical or similar elements are indicated by the same reference sign.

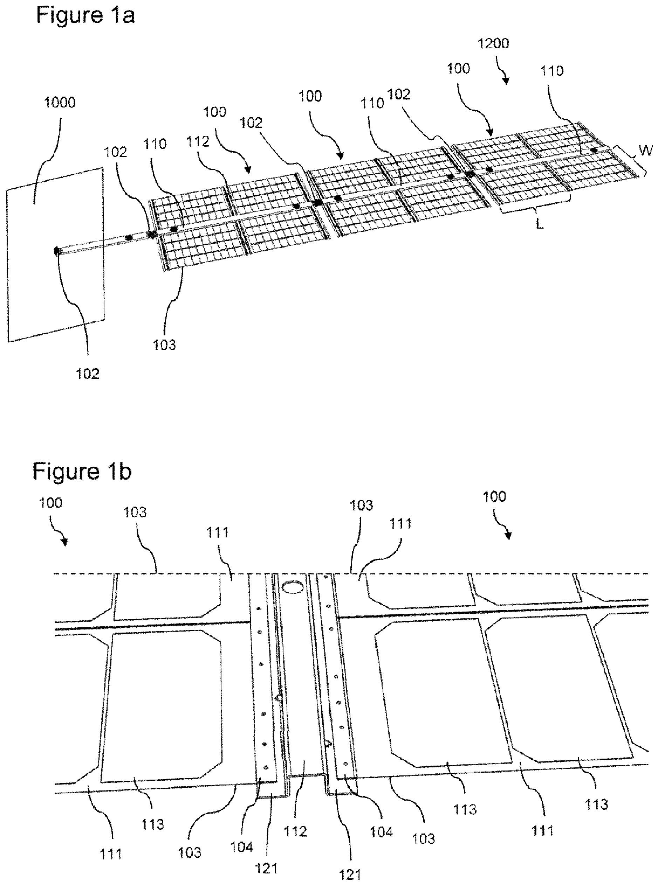

Figure 1a schematically shows a perspective view of a first example of a solar panel array 1200, according to the present invention, in a deployed state and comprising an articulated structure (yoke) having a plurality of semi-rigid solar panels 100 pivotally linked to each other and to a spacecraft 1000 at connection points 102 and by electrical wiring (not shown). The solar panel array 1200 is arranged for providing electrical power to the spacecraft 1000.

Each semi-rigid solar panel 100 has a frame comprising at least one rigid longitudinal beam 110 and at least two rigid lateral beams 112. In a deployed state of the solar panel array 1200, the longitudinal beam 110 extends perpendicular to a side wall of the spacecraft 1000 to support a portion of the total load of the solar panel array 1200 while the lateral beams 112 connect perpendicular to the longitudinal beam 110 and extend parallel to the side wall of the spacecraft 1000 to support loads of the semi-rigid solar panel 100 itself. The longitudinal 110 and lateral 112 beams may be made of any rigid material known in the art that fulfils the structural requirements of a specific spacecraft 1000, for example the beams maybe made of aluminium, titanium or carbon fibre. The longitudinal 110 and lateral 112 beams may have closed or open shape cross-sections or combinations thereof, for example, the beams may be tubular or may have additional arms forming open shape cross-sections. The semi-rigid solar panels 100 pivotally connect to each other or to the spacecraft 1000 at connection points 102 located in between the longitudinal beams 110, in which hinges or other pivot connections are located. In some embodiments, a deployable mast (not shown) is added to the solar panel array 1200 to support mechanical loads of the solar panel array 1200 in the deployed state, such that the longitudinal beams 110 of each semi-rigid solar panel 100 support the loads of the semi-rigid solar 100 panel itself. Solar power modules 103 may be placed within the frame.

Figure 1b shows parts of two semi-rigid solar panels 100 of the solar panel array of Figure 1a connected to lateral beam 112. The lateral beam 112 has a u-shape cross-section with two flanges 121 protruding from ends of the u-shape and directed towards the solar power modules 103. Two solar power modules 103 for each semi-rigid solar panel 10 are shown in Figure 1b. Each solar power module 103 comprises one or more flexible substrate sheets 111 carrying one or more solar cells 113 which may be attached to a surface of the sheets 111 by an adhesive. The solar power modules 103 may have a square, rectangular or any other shape defined between the longitudinal 110 and lateral 112 beams and may span partly or totally an area defined by the frame. In the depicted example, each solar power module 103 consists of at least one sheet 111. The one or more sheets 111 have a rectangular shape with short edges defining a width of the solar power module 103 and with long edges defining a length (L) of the solar power module 103 (See Figure 1a). Thus, the solar power modules 103 are arranged perpendicular to the lateral beam 112 and parallel to the longitudinal beam 110. The sheets 111 may be made of a space-compatible polymers (e.g., polyimide, glass fibre, cloth, aramid, fibre reinforced plastics or combinations thereof. The sheets 111 are connected to one or two lateral beams 112 by interfaces 104. Optionally, interfaces 104 may also be applied between the longitudinal beam 110 and the solar power module 103. In other words, the interfaces 104 may attach the sheets 111 to the lateral beams 112 or to the longitudinal beams 110.

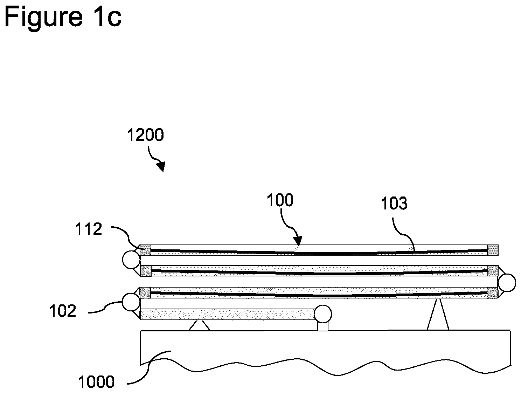

Figure 1c schematically shows a lateral view of the solar panel array 1200 of Figure 1a in a stowed state, which may be used during launch. In this stowed state of the solar panel array 1200, the semi-rigid solar panels 100 are piled onto each other such as surfaces of two adjacent semi-rigid solar panels 100 are facing each other.

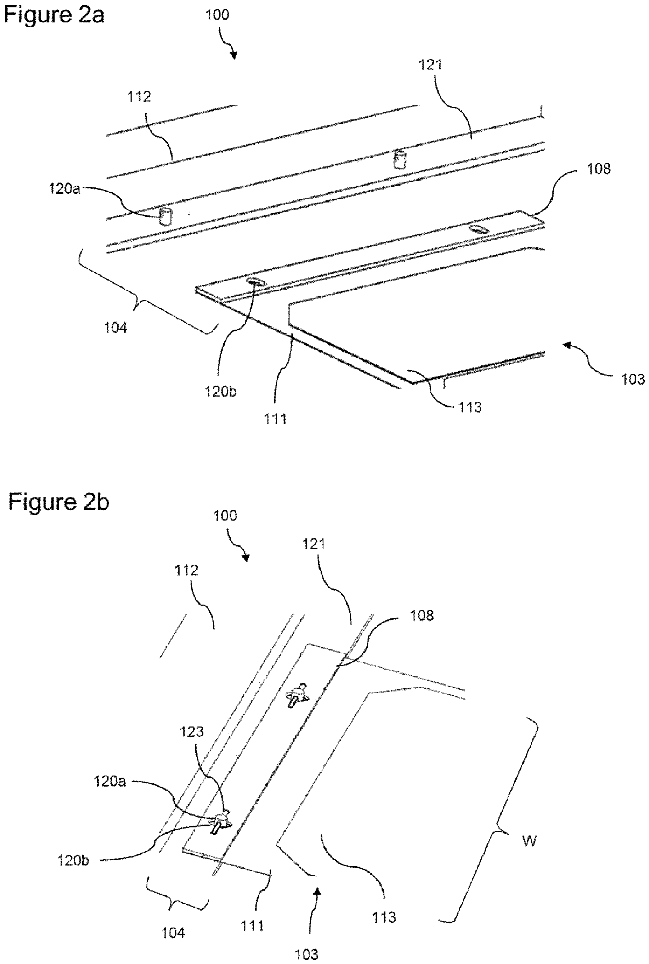

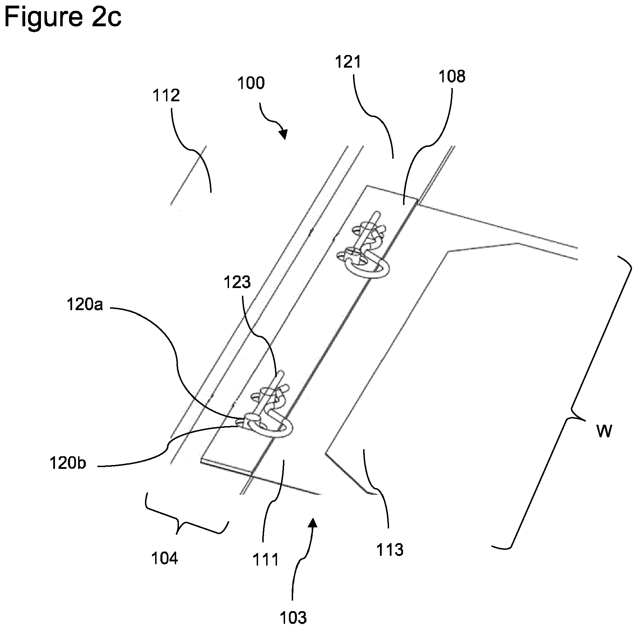

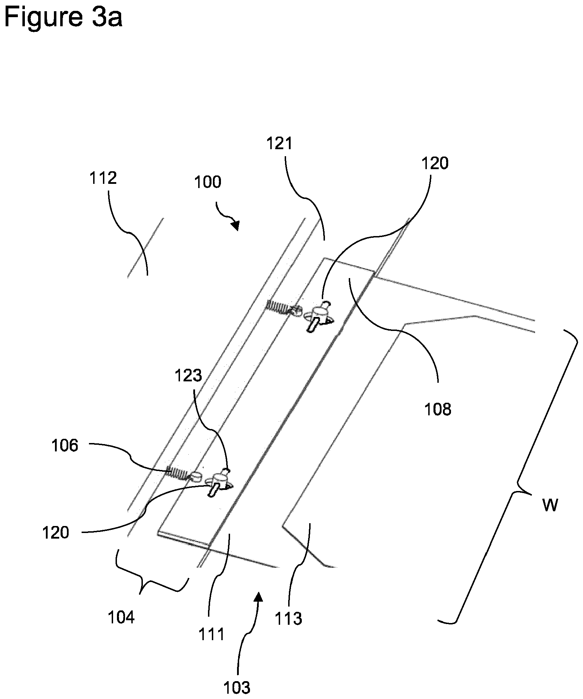

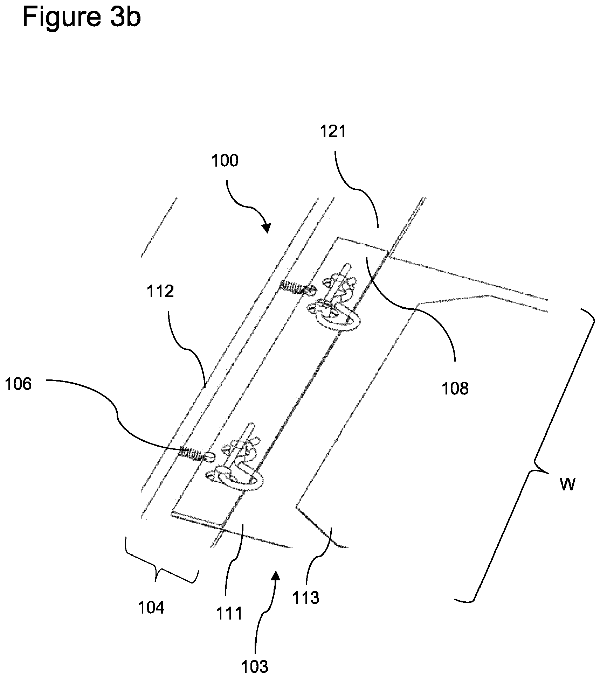

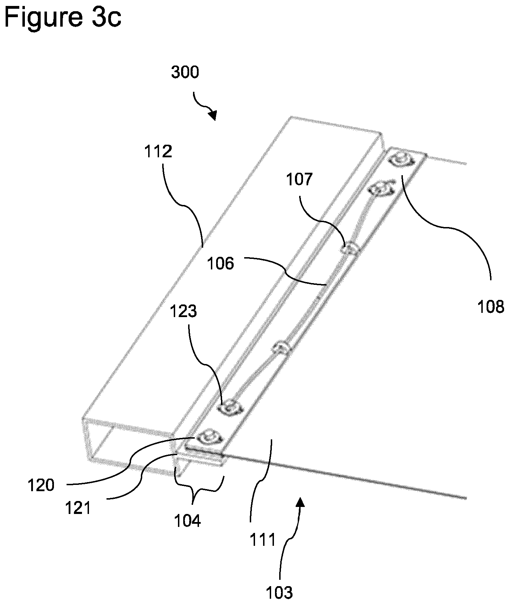

In some embodiments, interfaces 104 comprise a rigid connection between the solar power module 103 and the lateral beam 112 using a strip or a clamp. In some embodiments, the connection may be unidirectionally rigid by means of a cable or the like. In general, as the sheets 111 are flexible, they should be disposed into the frame under at least some tension. For example, the sheet 111 may be tensioned before it is clamped to the lateral beam 112. The interface 104 may comprise other elements that better provide and/or control tension at the connection between the solar power module 103 and the lateral beam 112 depending on the conditions in which the spacecraft 1000 is subjected. Figures 2 and 3 show embodiments of the semi-rigid solar panel 100 according to the present invention with different configurations of the interface 104.

The interface 104 may be configured to compensate for thermal expansion differences of the components of the semi-rigid solar panel 100. In general, spacecraft 1000 is subjected to large changes in temperature from launch to sunlit operation to Earth eclipses. The interface 104 may compensate for thermal expansion by allowing relative movement of the solar power module 103 within the frame.

Figures 2a, 2b, and 2c schematically show semi-rigid solar panels 100 with sliding connections 120 between a solar power module 103 and a frame via two or four sliding connections. The interfaces 104 include the connection of the solar power module 103 to the lateral beam 112 via at least one sliding connection 120. The interfaces 104 may have a minimum of two sliding elements 120a, 120b. In the embodiment illustrated in Figures 2a and 2b, the first sliding element 120a comprises a pin affixed to the flange 121 of the lateral beam 112. Correspondingly, the second sliding element 120b comprises a guide or track secured to one of the short edges of the sheet 111 that connects to the lateral beam 112. The pin 120a fits into the guide 120b and the guide 120b has a predefined length defined by at least two end-stops. The end-stops allow the pin 120a and the sheet 111 to slide relative to the guide 120b within a sliding range in a sliding direction that is parallel to the length L of the solar power module 103. Subsequently, the end-stops of the guide 120b allow sliding of the solar power module 103 in a direction parallel to the longitudinal beam 110. However, the sliding connection 120 may also be configured to allow sliding in a direction parallel to the lateral beam(s) 112.

It is important to note that while the sliding connection 120 permits limited movement between the sliding elements, it doesn't necessarily imply constant contact therebetween. Contact may only occur when one of the sliding elements, such as pin 120a, reaches one of the end-stops of the guide 120b. Further securing of the sheet 111 to the lateral beam 112 may involve a fastening element 123 as shown in Figure 2b, which could encompass a clamp, bolt, or similar device. Notably, the location of the fastening element 123 relative to the flange 121 surface exceeds the thickness of the solar power module 103. This facilitates a relatively minor range of sliding in a direction perpendicular to the solar power module's 103 plane, allowing a smooth movement of the sheet 111 in the sliding direction. It will be also understood that any configuration of the sliding connection that limits relative displacement of the sheet 111 to a certain sliding range within the frame 112 may be used. Optionally, a different number of sliding connections per sheet 111 may be used depending on the size and properties of the solar power module 103. For example, in the embodiment of Figure 2c, four sliding connections 120 are used in which a pair of sliders is located nearby adjacent corners of the sheet 111. Optionally, a rigid strip 108 may be used to reinforce the edge of sheet 111 and ensure the same sliding range provided by the sliding connection 120 across the sheet's width W.

The sliding range provided by the sliding connection 120 should be determined based on manufacturing tolerances and/or anticipated displacements arising from thermal expansion differences, of the at least one solar power module and the frame. The calculation of the sliding range could involve assessing the difference in coefficients of thermal expansion between the solar power module 103 and the beams 110, 112. This value may be then multiplied by the length L of the solar power module 103 and the difference between the maximum and minimum temperatures experienced during a lifetime of the spacecraft 1000. Furthermore, the precise location of the fastening element 123 relative to the flange 121 surface may require consideration of displacements due to thermal expansion differences parallel to the plane of the solar power module 103. If the fastening is too close to the solar power module, the fastening element 123 may hamper the function of the sliding connection 120. Additionally, the determination of both the sliding range and the position of the fastening element 123 is influenced by the need to prevent contact between solar power modules 103, as well as with other objects in their vicinity. These measures account for externally applied loads during vibration tests, transportation, or space launch, mitigating the potential for collisions that could harm the semi-rigid solar panel 100.

Certain embodiments may further incorporate resilient tensioning of the solar power module 103 facilitated by at least one resilient member. Figure 3a schematically shows the solar power module 103 and the frame of Figure 2c and further having resilient elements 106. Here, the interface 104 combines sliding connections 120 and resilient elements 106, here a coil springs, between the frame and one of the solar power modules 103. Resilient elements 106 provide a unidirectional bias onto the sheet 111, preferably the bias aligns with a plane defined by the solar power module 103. The bias provides a tensile force to the solar power module 103, preferably, the resilient element 106 is elastic. Preferably, the effective direction of this tension is parallel to the length of the solar power module 103, thereby ensuring that the tension within the solar power module 103 remains parallel to the longitudinal beam 110. In the embodiment of Figure 3a one end of the resilient element 106 attaches directly to the lateral beam 112 via the flange 121, while its opposing end is secured to the sheet 111. It is important to acknowledge that the skilled person will be able to use varied methods to affix the resilient element 106 to the lateral beam 112 and the sheet 111, allowing for flexible design options.

Optionally, a rigid strip 108 on the side of the sheet 111 connected to the resilient member 106 may be used to reinforce the edge of sheet 111 and evenly distribute the bias supplied by the resilient member 106 across the sheet's width (W). This ensures a more uniform distribution of tension within the solar power module 103. The attachment of the rigid strip 108 to the sheet 111 can be achieved through techniques such as bonding, or other established methods in the field.

The bias provided by the resilient member 106 ensures consistent extension of the sheets within the frame 101 under tension, effectively optimizing solar energy capture. Furthermore, the resilient member 106 acts as a safeguard, mitigating potential damage to the solar power module 103 arising from frequent movement or vibrations that the solar panel array 1200 may encounter. Due to its resilience, resonance frequencies of the solar power modules 103 are dependent on the mechanical properties of the resilient element 106. By considering a distance between attachment points, mass, stiffness, and damping coefficients of the resilient member 106, the lowest resonance frequency of the solar power module 103 can be tailored to exceed the lowest resonance frequency of the solar panel array 1200 in deployed state yet remain lower than the lowest vibration frequency experienced during spacecraft 1000 launch. This design minimizes the risk of damage or deformation inflicted upon the solar power module 103 and the solar panel array 1200 due to vibration. For example, the resonance frequency of the solar power module 103 may be lower than approximately 5 Hz, preferably lower than 2 Hz.

Figure 3b schematically shows the solar power module 103 and the frame of Figure 2c and further having resilient elements 106. This embodiment comprises four sliding connections 120 and two resilient elements 106, wherein each pair of sliding connections 120 are held together by a fastening element 123. More sliding connections 120 may be used to distribute the forces between sliding elements 120a, 120b. Similarly, more resilient elements 106 may be used to distribute the tension at the sheet 111, leading to smaller springs with a lower stiffness coefficient, for example.

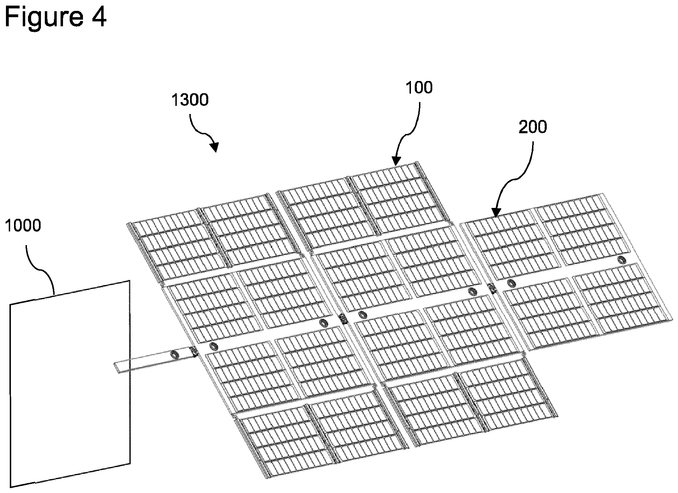

Figure 3c schematically shows another embodiment of the semi-rigid solar panel 300 with four sliding connections 120 and one resilient element 106. The solar power module 103, optionally through the rigid strip 108, is affixed using the fastening element 123, which comprises a bolt firmly connected to the flange 121 and optionally a washer. In this particular embodiment, the resilient element 106 is comprised by a spring wire, with both ends indirectly attached to the flange 121 of the frame through the fastening elements 123 and/or the pins of two of the sliders in the sliding connections 120. The resilient element 106 connects to the side of the solar power module 103 through gliding elements 107, embodied here as semicircular ring brackets. These brackets are positioned between the sliding connections 120, allowing the spring wire to smoothly glide within the brackets. This design allows the effective direction of the tension applied by the resilient element 106 to remain parallel to the length of the solar power module 103, thereby ensuring that the tension within the solar power module 103 stays aligned with the longitudinal beam 110. The embodiments of Figures 3a, 3b and 4 combining sliding connections 120 and resilient elements 106, result in semi-rigid solar panels 100, 300 able to withstand the encountered vibration frequencies and loads, while maintaining proper tension within the flexible sheets 111 that support the semirigid solar panels 100, 300.

Figure 4 schematically illustrates a second example of a solar panel array 1300 in a deployed state and having rigid solar panels 200 pivotally and longitudinally interconnected at connection points 102 that are, for example, hinges, while semi-rigid solar panels 100 pivotally attach laterally to the rigid solar panels 200 through hinges.

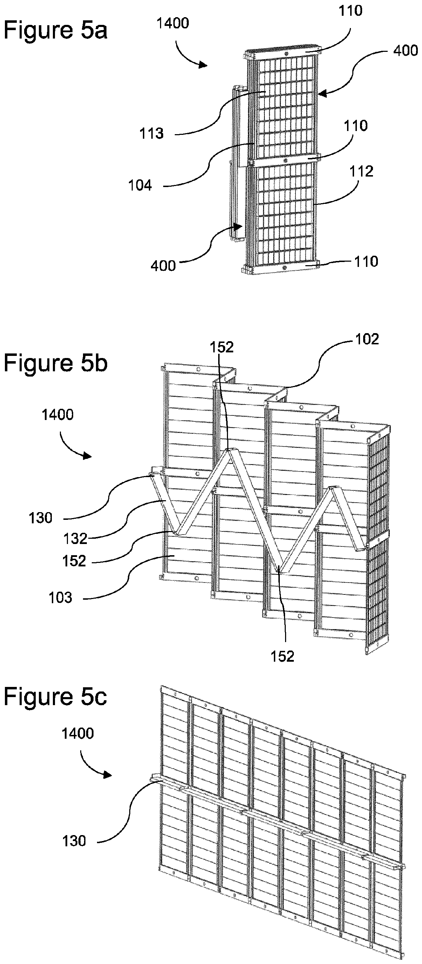

Figure 5 schematically illustrates a third example of solar panel array 1400 having semi-rigid solar panels 400. Figure 5a schematically shows a perspective frontal view of the solar panel array 1400 in a stowed state. Figures 5b and 5c schematically show a perspective back view of the solar panel array 1400, respectively, during deployment and in a deployed state. Each semi-rigid solar panel 400 is comprised of three longitudinal beams 110 and four lateral beams 112 which provide support to the short edges of the solar power modules 103 through the previously described interfaces 104.

The solar cells 113 are arranged to one side of the solar power modules 103, defining the frontal side of both the individual semi-rigid solar panels 400 and the solar panel array 1400, i.e., the side facing the sun. Each of the longitudinal beams 110 of the semi-rigid solar panels 400 connects in series at designated connection points 102, with the lateral beams 112 linked to these longitudinal beams 110. Together, they form the frames of the semi-rigid solar panels 400.

The rear side of the depicted solar power array 1400, as shown in Figure 5b and 5c, comprises an additional deployable structure 130 extending perpendicular to the sidewall of the body of the spacecraft and over the entire length of the solar panel array 1400. The deployable structure 130 connects to opposite ends of the solar power array 1400 and comprises multiple beams 132 connecting in series by interconnections 152. The deployable structure 130 improves a stiffness of the solar panel array 1400 in the deployed state and is able to transfer mechanical loads from the semi-rigid solar panels 400 to the deployable structure 130, improving the solar panel array 1400 stability and endurance. The additional deployable structure may be comprised by one or more structures capable of transforming from a stowed state into a deployed state. For example, the additional deployable structure may be an articulated beam, a pantographic structure, a collapsible tubular member or any other structure that can be stowed in a compact manner and extend in one direction. Notably, the semi-rigid solar panels, as outlined in this invention, can be arranged into any configuration of a solar panel array for a spacecraft.

The invention has been described with reference to some preferred embodiments. Obvious modifications and alterations will occur to the skilled in the art upon reading and understanding the preceding detailed description. It is intended that the invention be construed as including all such modifications and alterations insofar as they come within the scope of the appended claims, that is only limited by the definitions presented therein.

## Claims

1. A semi-rigid solar panel for a spacecraft comprising:
a frame; and
one or more solar power modules placed within the frame; wherein at least one side of the one or more solar power modules connects to the frame by a sliding connection, allowing the one or more solar power modules to slide within the frame.

2. The semi-rigid solar panel of claim 1, wherein the one or more solar power modules slide within the frame in a pre-determined sliding range, the sliding range being determined based on manufacturing tolerances and/or anticipated displacements arising from thermal expansion, of the at least one solar power module and the frame.

3. The semi-rigid solar panel of any preceding claim, wherein the frame comprises at least one longitudinal beam and at least two lateral beams and wherein the sliding connection is linear and aligns parallel to the longitudinal beam or lateral beam(s).

4. The semi-rigid solar panel of any preceding claim, wherein the one or more solar power modules comprise one or more flexible substrate sheets each carrying one or more solar cells attached to a surface of the sheets.

5. The semi-rigid solar panel of any preceding claim, wherein the one or more solar power modules have a rectangular shape with two short sides and two long sides, and wherein the sliding connection connects at least one short side of the solar power module to the frame.

6. The semi-rigid solar panel of any preceding claim, wherein the sliding connection comprises at least one first sliding element attached to the frame and at least one second sliding element attached to the side of the solar power module.

7. The semi-rigid solar panel of claim 6, wherein the least one first sliding element is a pin and the at least one second sliding element is a guide within a predefined length defined by end-stops, and wherein the pin slides in the guide.

8. The semi-rigid solar panel of any preceding claim, further comprising at least one resilient element between the frame and the at least one side of the solar power module.

9. The semi-rigid solar panel of claim 8, wherein the at least one resilient element provides a unidirectional elastic bias onto the solar power module, wherein a direction of the bias is within a plane defined by the solar power module, and wherein the at least one resilient element is configured to apply elastic tension in a direction parallel to a length of the solar power module and to keep the solar power module substantially parallel to a plane defined by the frame.

10. The semi-rigid solar panel of claim 8 or claim 9, wherein the resilient element adjusts a resonance frequency of the solar power module to a frequency lower than the lowest vibration frequency that is typically experienced by the spacecraft during launch.

11. The semi-rigid solar panel of any preceding claim, wherein the at least one side of the at least one solar power module connecting to the frame by the sliding connection is reinforced by a strip, and wherein the strip has a higher rigidity than the side of the solar power module.

12. The semi-rigid solar panel of any preceding claim, wherein the sliding connection and/or the resilient member are attached to the frame by a flange protruding from the frame towards the side of the solar power module and extending substantially parallel to a plane defined by the solar power module.

13. A solar panel array attached to a body of a spacecraft, comprising a plurality of solar panels arranged in an articulated structure pivotally linked to the spacecraft, wherein the solar panels are rigid solar panels and/or semi-rigid solar panels according to any of the preceding claims 1-13.

14. The solar panel array of claim 13, having a stowed state in which the articulated structure is folded with the solar panels stacked on each other, and a deployed state with the solar panels substantially linearly aligned adjacent to each other and extending from the body of the spacecraft, optionally wherein in the deployed state of the solar power array, the articulated structure comprises a supporting beam extending from a sidewall of the body of the spacecraft and is configured to support a total load of the solar panel array.

15. The solar panel array of claim 14, wherein the lowest resonance frequency of solar power modules arranged in the semi-rigid solar panels is higher than the lowest resonance frequency of the solar panel array in the deployed state, and lower than the lowest frequency experienced during launch in a stowed state.
